# EUROPEAN PATENT APPLICATION

(11) **EP 2 265 032 A2**
(43) Date of publication of application: **22.12.2010**
(21) Application number: 10165056.2
(22) Date of filing: 07.06.2010
(51) Int. Cl.: H04N 13/00

(54) **2D/3D video transmission apparatus**

(30) Priority: 15.06.2009 JP 2009142630
(71) Applicant: Sony Corporation, Tokyo (JP)
(72) Inventor: Hamada, Ichiro, TOKYO (JP)
(74) Representative: Thévenet, Jean-Bruno

(57) **Abstract**

Disclosed herein is a receiving apparatus (100) including, a video signal acquisition section (120) configured to acquire a video signal included in a digital broadcast signal, and a control section (180) configured to acquire display information regarding three-dimensional or two-dimensional display and included in both a system data area and a video data area of the digital broadcast signal in order to control the processing of video display with the video signal based on the display information. The system data area also includes information regarding the 2D/3D transition timing.

## Description

### BACKGROUND OF THE INVENTION

### 1. Field of the Invention

The present invention relates to a receiving apparatus, a transmitting apparatus, a communication system, a display control method, a program, and a data structure.

### 2. Description of the Related Art

Japanese Patent Laid-open No. 2008-042645 discloses a technique which, when outputting 2D (dimensional) and 3D pictures stored in mixed fashion, recognizes the picture to be output as a 2D or 3D picture based on a control signal so that the picture will be displayed appropriately in keeping with the type of the output apparatus in use. Japanese Patent Laid-open No. 2005-006114 discloses a technique which, if a TV program contains 3D pictures, inputs 3D-specific information in addition to the program information in order to generate EMT.

Also, Japanese Patent Laid-open No. 2005-175566 discloses a technique for supplementing 3D picture information with an identifier identifying the 3D picture so that a personal computer receiving picture information from web servers may distinguish between 2D and 3D picture information according to the identifier. Japanese Patent Laid-open No. 2005-175566 also discloses a technique for causing a 2D-3D display apparatus to switch between a 2D and a 3D display state in accordance with the result of picture identification so that contents with 2D and 3D pictures mixed therein may be displayed in a manner dynamically switching the 2D and 3D pictures.

### SUMMARY OF THE INVENTION

The techniques disclosed by the above-cited patent documents use the signals indicative of 3D pictures on the apparatus on the receiving side. However, simply sending the signal identifying 3D pictures to the receiving side's apparatus does not make it easy to optimally control the display of 3D and 2D pictures while keeping the functionality of the receiving apparatus.

The present invention has been made in view of the above circumstances and provides a receiving apparatus, a transmitting apparatus, a communication system, a display control method, a program, and a data structure whereby 3D and 2D pictures are displayed optimally in accordance with the functionality of the receiving apparatus in use.

In carrying out the present invention and according to one embodiment thereof, there is provided a receiving apparatus including: a video signal acquisition block configured to acquire a video signal included in a digital broadcast signal; and a control block configured to acquire display information regarding 3D or 2D display and included in both a system data area and a video data area of the digital broadcast signal in order to control the processing of video display with the video signal based on the display information.

Preferably, the control block may include a central processing unit; and the central processing unit may control the components associated with the video display based on the display information included in the system data area.

Preferably, the control block may include a decoder configured to decode the video signal; and the decoder may control decode processing based on the display information included in the video data area.

Preferably, the display information may include information for effecting transition to a 2D video while a 3D video is being broadcast.

Preferably, the display information may include information for displaying a 3D video as a 2D video.

Preferably, the display information included in the system data area may include information regarding the transition timing from a 3D video to a 2D video, or the transition timing from a 2D video to a 3D video.

Preferably, the information regarding the transition timing may be time information indicating the time it takes for the video signal to transition from a 3D video to a 2D video, or the time it takes from the video signal to transition from a 2D video to a 3D video.

Preferably, the information regarding the transition timing may be acquired before the time at which the video signal transitions from a 3D video to a 2D video, or before the time at which the video signal transitions from a 2D video to a 3D video.

Preferably, the information regarding the transition timing may be time information indicative of the actual time at which the video signal transitions from a 3D video to a 2D video, or the actual time at which the video signal transitions from 2D video to a 3D video.

Preferably, the receiving apparatus according to the present invention may further include an input block configured to allow a user to input display setting information; wherein, if the display setting information is input, then the control block may control the processing of video display with the video signal using the display setting information more preferentially than the display information.

Preferably, the display information may include information regarding a 3D video format.

According to another embodiment of the present invention, there is provided a transmitting apparatus including: a display information insertion block configured to insert display information regarding 3D or 2D display into both a system data area and a video data area of a digital broadcast signal; and an output block configured to output the digital broadcast signal with the display information inserted therein.

According to a further embodiment of the present invention, there is provided a communication system including a transmitting apparatus and a receiving apparatus; wherein the transmitting apparatus includes: a display information insertion block configured to insert display information regarding 3D or 2D display into both a system data area and a video data area of a digital broadcast signal; and an output block configured to output the digital broadcast signal with the display information inserted therein; and wherein the receiving apparatus includes: a video signal acquisition block configured to acquire a video signal included in the digital broadcast signal; and a control block configured to acquire the display information in order to control the processing of video display with the video signal based on the display information.

According to an even further embodiment of the present invention, there is provided a display control method including the steps of: acquiring a video signal included in a digital broadcast signal; acquiring display information regarding 3D or 2D display and included in both a system data area and a video data area of the digital broadcast signal; and controlling the processing of video display with the video signal based on the display information.

According to a still further embodiment of the present invention, there is provided a program for causing a computer to function as an apparatus executing a procedure including the steps of: acquiring a video signal included in a digital broadcast signal; acquiring display information regarding 3D or 2D display and included in both a system data area and a video data area of the digital broadcast signal; and controlling the processing of video display with the video signal based on the display information.

According to a yet further embodiment of the present invention, there is provided a data structure for a digital broadcast signal including a video signal related to content to be broadcast and system data; wherein the video signal and the system data include display information regarding 3D or 2D display; and wherein the digital broadcast signal causes a receiving apparatus to function in a manner controlling the processing of video display with the video signal based on the display information.

As outlined above, the present invention provides a receiving apparatus, a transmitting apparatus, a communication system, a display control method, a program, and a data structure whereby the video display of a 3D video and a 2D video may be carried out optimally in keeping with the functionality of the receiving apparatus in use.

### BRIEF DESCRIPTION OF THE DRAWINGS

Further objects and advantages of the present invention will become apparent upon a reading of the following description and appended drawings in which:
Fig. 1 is a schematic view showing a typical structure of a receiving apparatus as one embodiment of the present invention;
Fig. 2 is a schematic view showing a typical structure of a transmitting apparatus as another embodiment of the present invention;
Fig. 3 is a flowchart of a typical procedure for effecting high-speed transition between 3D and 2D display; and
Fig. 4 is a flowchart of a typical procedure for effecting transition between 3D and 2D display with transition time taken into consideration.

### DETAILED DESCRIPTION OF THE PREFERRED EMBODIMENTS

The preferred embodiments of the present invention will now be described below in detail with reference to the accompanying drawings. In the description that follows and in the accompanying drawings, like reference numerals designate like or corresponding parts throughout, and their descriptions may be omitted where redundant.

The descriptions will be given under the following headings:
(1) Prerequisite techniques
(2) Structure of the system embodying the invention
(3) Information about 3D videos
(4) Processing on the receiving apparatus side
(5) Effects of the insertion of 3D information
(6) Procedures of the receiving apparatus

### (1) Prerequisite techniques

For digital broadcasting, video and audio signals as well as EPG (Electronic Program Guide) and other data are transmitted by generally utilizing transport streams under H.222 ISO/IEC IS 13818-1, Information Technology-Generic Coding of Moving Pictures and Associated Audio Information: System. The transmitted signals and data are received by the receiving apparatus in use and separated into video and audio data as well as into system data for picture display and sound output.

Where 3D (three-dimensional) contents are to be displayed using the scheme above, information such as the aspect ratio and resolution of a given video content may be transmitted using transport streams according to the existing standards. However, the scheme above has no provisions for transmitting 3D information.

On the receiving apparatus side, it is necessary to change the mode of processing between a 3D video and a 2D video upon receipt. However, merely receiving a 3D video does not let the receiving apparatus recognize that the video in question is in 3D. This leaves the receiving apparatus incapable of performing processes suitable for 3D video data and failing to display the 3D video appropriately. By contrast, a system embodying the present invention automatically determines whether the received video data is 3D data or 2D data. When the receiving apparatus receives a 3D broadcast content, the inventive system then suitably controls the necessary processing automatically.

### (2) Structure of the system embodying the invention

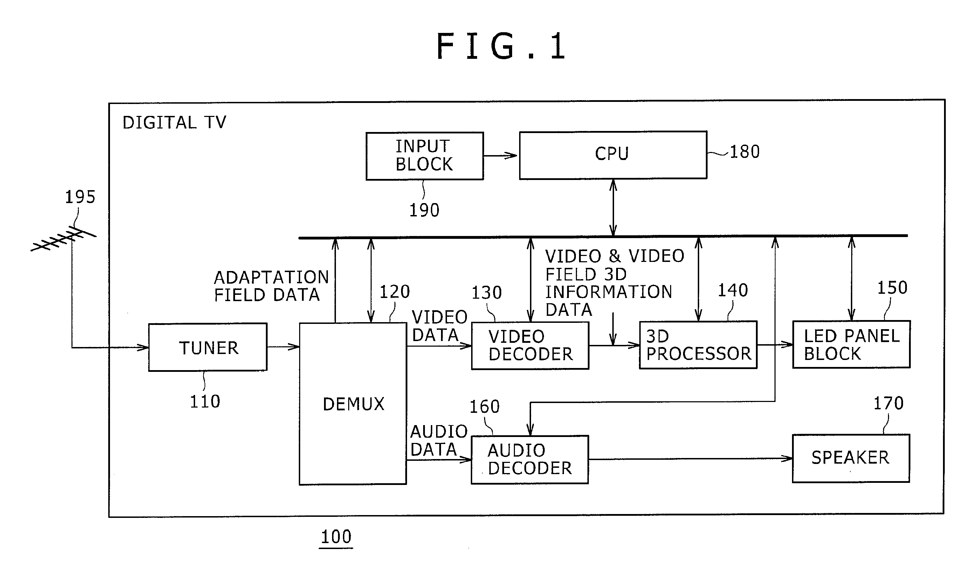

Fig. 1 is a schematic view showing a typical structure of a receiving apparatus 100 as one embodiment of the present invention. The receiving apparatus 100 is illustratively a user's apparatus for viewing contents such as TV programs received in digital broadcast signals. The apparatus displays the received video on a display screen while outputting the received sound. The receiving apparatus 100 is capable of displaying 3D videos in the side-by-side format, as well as ordinary 2D videos. As will be discussed later, 3D display may be given in a format other than the side-by-side format. As shown in Fig. 1, the receiving apparatus 100 includes a tuner 110, a demux 120, a video decoder 130, a 3D processor 140, an LED panel block 150, an audio decoder 160, speakers 170, a CPU 180, and an input block 190.

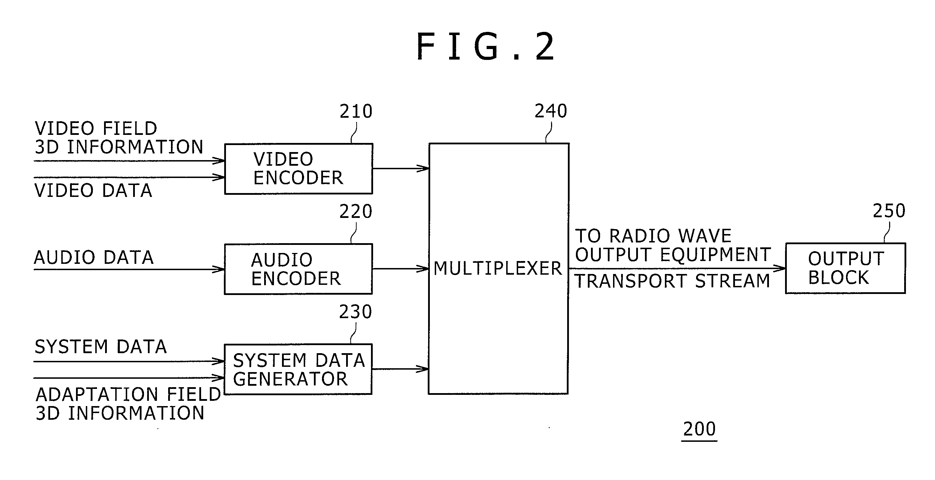

Fig. 2 is a schematic view showing a typical structure of a transmitting apparatus 200 as another embodiment of the present invention. The transmitting apparatus 200, set up at a broadcasting station, transmits program contents and related information using digital broadcast signals to the receiving apparatus 100. Illustratively, the receiving apparatus 200 outputs the above-described 3D videos and ordinary 2D videos to the receiving apparatus 100. As shown in Fig. 2, the transmitting apparatus 200 includes a video encoder 210, an audio encoder 220, a system data generator 230, a multiplexer 240, and an output block 250.

A communication system as another embodiment of the present invention is implemented by connecting the receiving apparatus 100 shown in Fig. 1 with the transmitting apparatus 200 in Fig. 2 in wired or wireless fashion. In the communication system configured in this manner to embody the invention, the transmitting apparatus 200 transmits information related to 3D videos (i.e., 3D information) along with the video signal, audio signal, and EPG information. The receiving apparatus 100 controls its own functions based on the 3D information received from the transmitting apparatus 200.

### (3) Information about 3D videos

What follows is a detailed explanation of the information regarding 3D videos and transmitted from the transmitting apparatus 200. The typical information about 3D videos is described below. In the communication system embodying the present invention, diverse kinds of information including the data mentioned above are placed in the format of digital broadcast signals and transmitted from the transmitting apparatus 200 to the receiving apparatus 100. On acquiring such transmitted information, the receiving apparatus 100 can appropriately display a 3D video or a 2D video, and can also appropriately display a 2D video and a 3D video in accoradnace with the transitions that would occur between them. The representative information about 3D videos is as follows:
1. Information about the 3D video format;
2. Information about the point in time at which the transition (i.e., transition timing) from the standard format (2D video) to a 3D video or from a 3D video to the standard format (2D video); and
3. Information for allowing the receiving apparatus 100 to display a 3D content being transmitted as the 3D video as a 2D video.

In order to transmit the information about 3D videos from the transmitting apparatus 200 to the receiving apparatus 100, this embodiment of the invention inserts 3D information into two different areas of digital broadcast data. The first area in which to insert the information is a system data area (called the first area hereunder where appropriate). The first area may be an adaptation field or a PES (Packetized Elementary Stream) packet in the transport stream defined by H.222 ISO/IEC IS 13818-1 Information Technology--Generic Coding of Moving Pictures and Associated Audio Information: System. More specifically, "Transport_private_data_flag" defined by the transport stream adaptation field is first set so as to be followed by a later-defined Transport_private_data area into which the information can be inserted. A PES extension flag defined by the PES packet is then set so as to be followed by a later-defined PES extension in which a PES private data flag is set. Thereafter, the PES private data area is defined in which to insert the information.

The other area in which to insert the information is a video data area (called the second area hereunder where appropriate). Illustratively, the information may be inserted in a user data area of the picture header defined by the format in accordance with MPEG-2 Video (H.222 ISO/IEC IS 13818-1 Information Technology--Generic Coding of Moving Pictures and Associated Information: Video). Alternatively, the data regarding 3D videos may be inserted into a sequence header, a slice header, or a macro block header.

The data regarding 3D videos can be inserted only when a 3D content is to be displayed; the information cannot be inserted in the case of 2D display. It follows that the receiving apparatus 100 recognizes the received video data as 2D video data if no data regarding 3D videos is found inserted in the digital broadcast signal data.

The information to be inserted in the first area is placed into system data by the system data generator 230 of the transmitting apparatus 200. The information to be inserted in the second area is placed into video data by the video encoder 210 of the transmitting apparatus 200. The multiplexer 240 of the transmitting apparatus 200 generates a digital broadcast signal transport stream out of the system data input from the system data generator 230, the video data from the video encoder 210, and the audio data from the audio encoder 220 the generated transport stream is forwarded to the output block 250.

In the receiving apparatus 100, the information inserted in the first area is extracted by the demux 120 and sent to the CPU 180. The CPU 180 controls the functions of the receiving apparatus 100 based on the transmitted information about 3D videos. The information inserted in the second area is acquired by the video decoder 130 and used thereby to control its own functions. The information acquired by the video decoder 130 is also forwarded to the CPU 180 for controlling the functions of the receiving apparatus 100 as well as to the 3D processor 140 for controlling the functions of the latter.

Below is a detailed explanation of the information to be inserted in the first and the second areas. Explained first is the information to be inserted in the Transport_private_data area as the first area. The 3D information (three_dimensional_information) given below is inserted in the Transport_private_data area as adaptation field 3D information. In the transmitting apparatus 200, the adaptation field 3D information is input to the system generator 230 whereby the information is forwarded to the multiplexer 240 along with the system data. From the multiplexer 240, the information is sent as the transport stream to radio wave output equipment.

**[Table 1: Content of the Adaptation Field 3D Information]**

| | | |
|---|---|---|
| three_dimensional_information (){ | | |
| information_id | | 8 bslbf |
| data_length | | 8 uimsbf |
| reserved | | 3 bslbf |
| version_number | | 5 bslbf |
| three_dimension_format | | 8 bslbf |
| three_dimension_sub_format | | 8 bslbf |
| default_picture | | 3 bslbf |
| display_control | | 3 bslbf |
| transition_flag | | 1 bslbf |
| format_dependent_flag | | 1 bslbf |
| (transition_flag == 1){ | | |
| | transition_type | 2 bslbf |
| | transition_timing | 3 bslbf |
| | if(transition_timing == 0X01){ | |
| | transition_time | 11 uimsbf |
| | } | |
| | else{ | |
| | reserved | 11 bslbf |
| | } | |
| else{ | | |
| | reserved | 16 bslbf |
| if(format_dependent_flag == 1){ | | |
| | for(i=0;i<N;i++){ | |
| | format_dependent_data_byte | 8 bslbf |
| | } | |
| } | | |

What follows is a detailed explanation of the adaptation field 3D information. "three_dimensional_information" is information regarding 3D display and includes the following:

```
         information_id
         data_length
         reserved
         version_number
         three_dimension_format
         three_dimension_sub_format
         default_picture, display_control
         transition_flag, format_dependent_flag
```

The adaptation field 3D information may include information other than "three_dimensional_information." For this reason, "three_dimensional_information" is defined as the 3D information in the adaptation field 3D information.

"information_id" is identification information. This ID indicates that the information described as the adaptation field 3D information is 3D information (three_dimensional_information). "data_length" is information indicative of the length of data (data bytes) subsequent to "data_length." As such, "data_length" is information indicating the number of the data bytes constituting "three_dimensional_information." "Reserved" denotes reserved data.

"version_number" represents the version number of this 3D information. The adaptation field 3D information shown in Table 1 above is transmitted from the transmitting apparatus 200 to the receiving apparatus 100 illustratively a few times per second. The version number is incremented by one every time "three_dimensional_information" is changed. If the version number turns out to be the same as the most recently transmitted number, that means the transmitted 3D information is the same as the last one. If the newly received 3D information has the same version number as that of the most recently received 3D information, then the receiving apparatus 100 ignores the newly received 3D information because the information has already been received. After reaching the value 31, the version number returns to 0.

"three_dimension_format" is information indicative of the 3D format mentioned above. The formats involved are defined as follows:

| | |
|---|---|
| 0x00 | side by side |
| 0x01 | Frame packing |
| 0x02 | Line alternative |
| 0x03 | Field alternative |
| 0x04-ff | reserved |

If "three_dimension_format" is defined as "0x00," that means the 3D format is the side-by-side format. The side-by-side format involves splitting one normal screen into a right and a left side, and sending a left-eye (L) video display signal and a right-eye (R) video display signal to the left and the right display sides respectively so that the receiving apparatus 100 may separately expand each of the two pictures in the horizontal direction. Alternatively, as listed above, "three_dimension_format" may be defined to designate the frame packing format, line alternative format, field alternative format, etc.
"three_dimension_sub_format" is information indicating differences between the 3D formats defined by "three_dimension_format," such as resolution and data transfer rate. Illustratively, if the three-dimension format is the side-by-side format (0x00), then the "three_dimension_sub_format" may be defined as follows:
three_dimension_sub_format(if three_dimension_format == 0x00)

| | |
|---|---|
| 0x00 | half resolution, Left picture for Left |
| 0x01 | half resolution, Right picture for Left |
| 0x02 | full resolution, Left picture for Left |
| 0x03 | full resolution, Right picture for Left |
| 0x04-ff | reserved_future_use |

"default_picture" is information for designating the right or the left picture to be used for display when a 3D video is to be displayed as a 2D video by the receiving apparatus. Illustratively, if the side-by-side format is in effect, the default picture may be defined as follows:

| | |
|---|---|
| 0x00 | not defined |
| 0x01 | left picture |
| 0x02 | right picture |
| 0x03-07 | reserved |

If the default picture is set for "0x01" in the above example, then the receiving apparatus 100 receiving a 3D video in the side-by-side format uses only the left-eye video (left picture) for display. In this manner, the receiving apparatus 100 upon receipt of a 3D video can display a 2D video instead.
"display_control" is information for designating a display format for use during 3D content display. While a 3D video is being displayed, superimposed 2D characters might appear blurred as long as the 3D video display is maintained. This kind of trouble can be avoided by suitably defining "display_control." Illustratively, "display_control" may be defined as follows:

| | |
|---|---|
| display_control | |
| 0x00 | no requirement for display control. |
| 0x01 | 2D display is required even if 3D video appears. |
| 0x02 | 2D display is preferred. |
| 0x03-07 | reserved |

"transition_flag" is information indicative of transition from 2D to 3D or vice versa. Illustratively, "transition_flag" may be defined as shown below, with no transition if the transition flag is defined as "0" whereas transition is carried out if the transition flag is defined as "1":

| | |
|---|---|
| Transition_flag | |
| 0 | Transition not activated |
| 1 | Transition activated |

"format_dependent_flag" is a flag that indicates whether additional information is included. If the format dependent flag is "1," it indicates that additional information is included in the adaptation field 3D information. If the format dependent flag is "0," it indicates that no additional information exists in the adaptation field 3D information. Setting "format_dependent_flag" to "1" makes it possible to include additional information depending on the 3D format in use.

When the transition_flag is "1," the information of "transition_type" and "transition_timing" is indicated. Illustratively, the transition type may be defined as one of the following four items of information:
transition_type
0x00

If the transition type "Ox00" appears for the first time or while 2D mode is in effect, transition takes place from 2D to 3D. If the transition type "0x00" appears in 3D mode, then transition occurs from 3D to 2D. In this case, the transition timing is applied only to the transition from 2D to 3D. The transition from 3D to 2D may be utilized illustratively when high-speed transition is required.

| | |
|---|---|
| 0x01 | indicative of transition from 3D to 2D |
| 0x02 | indicative of transition from 2D to 3D |
| 0X03 | reserved |

"transition_timing" is information indicating the time that elapses until transition takes place. Illustratively, the transition timing may be defined as follows:

| | |
|---|---|
| transition_timing | |
| 0x00 | immediate transition |
| 0x01 | transition happened after time defined |
| 0x02 | transition happened 500 msec later |
| 0x03 | transition happened 1 sec later |
| 0x04 | transition happened 2 sec later |
| 0x05-07 | reserved_future_use |

If the transition time is defined as "0x00" in the above example, transition occurs immediately. If the transition timing is defined as "0x01," then transition takes place after a defined time period. If the transition timing is defined as "0x02," transition is effected 500 msec later. If the transition timing is defined as "0x03," transition is activated 1 second later. If the transition timing is defined as "0x04," then transition occurs 2 seconds later. The transition timings "0x05" through "0x07" are reserved as data areas for future use.

When "transition_timing" is "0x01," the time at which transition occurs ("transition_time") is defined as 11 "uimsbf" data. The value indicated using the data corresponds to the time that elapses (msec) until transition takes place. Because "transition_time" constitutes 11-bit data, up to 2,048 msec may be defined as the transition time using the data. If the transition timing is not "0x01," then "transition_time" is reserved as a data area (11 bslbf) for future use. If "transition_flag" is "0," then "transition_time" is reserved as a data area (16 bslbf) for future use.

Alternatively, "transition_timing" may be replaced by an absolute time PCR (program clock reference). In this case, if "transition_flag" is set to "1" in the above-mentioned adaptation field 3D information, the data structure involved is as follows:

```
        if(transition_timing == 0x01){
                          reserved 2 bslbf
                          transition_time 33 uimsbf
        }
        else{
                          reserved 35 bslbf
        }
```

In the above example, with "transition_flag" set to "1," a reserved data area of 2 bslbf is provided. "transition_time" is indicated as the absolute time PCR using 33-uimsbf data. In this case, the 12-bit area in Table 1 is expanded to a 36-bit field. It then becomes possible to transmit the absolute value of the transition time by inputting an appropriate transition time value in the format of the program clock reference base stipulated by H.222 ISO/IEC IS 13818-1, Information Technology--Generic Coding of Moving Pictures and Associated Audio Information: System.

If "format_dependent_flag" is set to "1," then the remaining data length may be defined using "format_dependent_data_byte (8 bslbf). This allows relevant additional information to be inserted depending on the 3D format in effect.

As described above, 3D information is inserted by first setting "Transport_private_data_flag" in the transport stream adaptation field defined by H.222 ISO/IEC IS 13818-1, Information Technology--Generic Coding of Moving Pictures and Associated Audio Information: System, and by inserting the adaptation field 3D information of Table 1 in the "Transport_private_data" area. This information may be placed into the PES private data area defined following the PES private data flag set in the PES extension stipulated by the PES extension flag of the PES packet according to the H.222 ISO/IEC IS 13818-1 standard above. In this case, the private area is fixed to 128 bits in length, so that the information in Table 1 is placed into the first 40 bits and the remaining 88 bits are left reserved.

When 3D information is to be inserted in the above-mentioned first area. the information is placed into the system data area. That means the transmitting apparatus 200 can insert 3D information at desired timings into TV programs being organized. Thus urgent information may be inserted as needed using the above-mentioned superposed characters. This allows the receiving apparatus 100 to display relevant character information appropriately. The 3D information inserted in the first area is processed by the receiving apparatus 100 in the system layer (demux layer), and mainly the CPU 180 performs its processing according to the processed information.

What follows is an explanation of the information to be inserted in the video data area. For insertion into an MPEG-2 video program, the information listed below is placed into the user data area of the picture header defined by a format complying with the MPEG-2 Video standard. In the transmitting apparatus 200, video field 3D information is input to the video encoder 210 and forwarded to the multiplexer 240 before being sent as a transport stream to the radio wave output equipment.

**[Table 2: Content of the Video Field 3D Information]**

| | | |
|---|---|---|
| three_dimensional_information (){ | | |
| | information_id | 8 bslbf |
| | data_length | 8 umisbf |
| | three_dimension_format | 8 bslbf |
| | three_dimension_sub_format | 8 bslbf |
| | default_picture | 2 bslbf |
| | reserved | 6 bslbf |

The items of information indicated by "information_id," "data_length," "three_dimension_format," "three_dimension_sub_format," "default_picture," and "reserved" in the video field 3D information are the same as their counterparts in the adaptation field 3D information. It should be noted that some bit assignments are different in the video field 3D information.

The video field 3D information is inserted in the video data area. Illustratively, where the information is to be inserted into an MPEG-2 video program under MPEG-2 Video (H.222 ISO/IEC IS 13818-1 Information Technology--Generic Coding of Moving Pictures and Associated Information: Video), the information may be placed into the user data area of the picture header (I picture, P picture, B picture) defined by a format complying with the standard above. The information in Table 2 may be inserted into the user data area of the sequence header (i.e., starting header of a group of pictures (GOP)) defined by the same format. It is also possible to insert the information into the user data area of a slice header or into the user data area of a macro block header.

The 3D information in Table 2 above, along with video data, is sent from the demux 120 to the video decoder 130. The video field 3D information is inserted only in 3D videos and not in ordinary video signals (2D). Thus given the 3D information in Table 2, the video decoder 130 can effect transition from 3D decode processing to 2D decode processing or vice versa automatically and instantaneously. Also, the video decoder 130 performs the transition of decode processing instantaneously in keeping with the 3D format settings included in "three_dimension_format" and "three_dimension_sub_format." Thus the 3D information in Table 2 is useful for a receiving apparatus 100 capable of effecting instantaneous transition between 3D and 2D display. Since the 3D information in Table 2 is inserted by the video encoder 210 of the transmitting apparatus 200 into the video data being generated concurrently, the information to be added for organizing TV programs such as the character data mentioned above should preferably be inserted into the information listed in Table 1.

### (4) Processing on the receiving apparatus side

With the 3D information inserted into the two areas of the transport stream as discussed above, video data is transmitted from the transmitting apparatus to the receiving apparatus. The receiving apparatus extracts the 3D information from the received data so as to control its own functions.

As shown in Fig. 1, an MPEG-2 signal is received by an antenna 195. A relevant frequency is selected by the tuner 110 from the received signal and processed subsequently by a demodulator for conversion into a transport stream that is fed to the demux 120. The demux 120 separates the transport stream into video and audio data and detects adaptation field 3D information therefrom. The video data is sent to the video encoder 130, the audio data to the audio encoder 160, and the adaptation field 3D information to the CPU 180. When transition occurs from 3D to 2D or vice versa based on the adaptation field 3D information, the CPU 180 controls the components such as the video decoder 130, 3D processor 140, LED panel block 150, and audio decoder 160 correspondingly. The video decoder 130 decodes the video signal while the 3D processor 140 performs processes necessary for the LED panel block 150 to carry out 3D display properly. Thereafter, the LED panel block 150 provides video display in keeping with the 3D or 2D display format. The audio decoder 160 sends decoded audio information to the speakers 170.

The CPU 180 further controls the transition timing between 3D and 2D based on "transition_time" included in the adaptation field 3D information. In accordance with "version_number" included in the adaptation field 3D information, the CPU 180 checks the adaptation field 3D information for any update and determines whether or not to perform transition between 3D and 2D. Also, the CPU 180 determines the 3D display format based on "three_dimension_format" and "three_dimension_sub_format" and controls such components as the video decoder 130, 3D processor 140, LED panel block 150, and audio decoder 160 correspondingly.

Upon receipt of the video data, the video decoder 130 extracts the video field 3D information from the received data and changes controls accordingly. Illustratively, the video decoder 130 may change the 3D format settings based on "three_dimension_format." The video field 3D information extracted by the video decoder 130 is forwarded to the CPU 180. On the basis of the video field 3D information, the CPU 180 controls the components such as the 3D processor 140, LED panel block 150, and audio decoder 160.

If the video decoder 130 can directly switch the decoding process based on the received information in Table 2, i.e., if the receiving apparatus 100 is capable of performing high-speed transition, then the video decoder 130 transfers the 3D information directly to the 3D processor 140. This allows the 3D processor 140 to perform 3D display processing automatically.

If the receiving apparatus 100 is capable of high-speed transition, then the video decoder 130 transfers the 3D information data directly to the 3D processor 140. In this case, the 3D processor 140 can perform 3D display processing automatically.

In the receiving apparatus 100 embodying the invention and structured as discussed above, the video decoder 130 and CPU 180 have the capability to acquire 3D display information regarding 3D display and listed in Tables 1 and 2. The video decoder 130 and CPU 180 also have the ability to control the processing of video display using the video signal in the digital broadcast signal. The components shown in Figs. 1 and 2 can be implemented using either hardware (circuits) or a central processing unit (CPU) running on programs (i.e., software) causing the CPU to function.

### (5) Effects of the insertion of 3D information

As described above, in the existing state of the art, there is no scheme for transmitting information regarding 3D or 2D. That means the receiving apparatus cannot automatically determine whether what is being received is a 3D video or a 2D video and provide suitable display accordingly. Discussed below are five typical 3D/2D determination functions (A) through (E) expected of the receiving apparatus 100 by the broadcasting side offering contents. The embodiments of this invention can address any one of the five functions (A) through (E) by having the above-mentioned 3D information inserted into the two areas of the digital broadcast signal.
(A) The transmitting side (i.e., transmitting apparatus 200) offering contents may cause transitions from 3D to 2D while transmitting a 3D content, or from 2D to 3D while sending 2D content. One example of such transition involves having a CM (commercial message) content inserted while a 3D content is being transmitted. If the CM is in the 3D format, then continuity in 3D display is maintained and there is no need to change the display format. But when the CM is broadcast in the 2D format, which is usually the case, it is difficult to convert the CM content provided by the sponsor into a 3D video for transmission to the receiving apparatus 100. Thus in order to make a transition to the CM content during 3D content transmission, it is preferred that information about a point of change from 3D to 2D display (i.e., time information such as transition timing) be inserted in the 3D information output from the broadcasting side, so that the receiving apparatus may thereby determine the transition from 3D to 2D automatically and change the display format accordingly. With the CM terminated, it is necessary to provide the receiving apparatus with information about a point of change from 2D to 3D display so as to effect transition back to 3D display.
(B) As another function of the receiving apparatus, it is preferred that the apparatus can make a transition instantaneously from 3D to 2D display or vice versa. However, the structure of the receiving apparatus can make it difficult to achieve such high-speed transition. In fact, it may take some time for the transition to occur. Merely inserting 3D/2D transition information into points of change in the content may fail to cause the receiving apparatus 100 to make a transition at the points in time expected by the broadcasting side. Specifically, transition by the receiving apparatus 100 may take place later than expected by the broadcasting side. With transition effected at a point later than anticipated by the broadcasting side, an initial portion of the content immediately after the transition may not be displayed properly.
   With regard to the functions (A) and (B) above, it is preferred that the receiving apparatus 100 is able to transition unfailingly from the 3D display function to the 2D display function or vice versa for reliable display of an initial portion of the CM because CM pictures are generally considered particularly important. When the information in Table 2 is used as described above, it is possible to directly change the function of the video decoder 130. Thus a receiving apparatus 100 capable of performing instantaneous transition between 3D and 2D display can utilize the information in Table 2 for transition control.
   In the case of a receiving apparatus 100 that needs time for a transition to take place in a display, the CPU 180 uses the information of "transition_type," "transition_timing," and "transition_time" in Table 1 to exercise control in such a manner as to complete the transition process before an actual transition takes place. The transmitting apparatus 200 provides the receiving apparatus 100 with information for designating a point of transition before the actual transition timing occurs so that the transition can take place where expected by the transmitting side. This makes it possible to avoid the situation where an initial portion of the content is lost upon transition. In this case, the transmitting apparatus 200 is arranged to set its information in accordance with the settings of the transition type, transition timing, and transition time, so that the receiving apparatus 100, requiring time for a transition to take place, will operate as desired. Preferably, the time-related settings are made in such a manner that a large number of receiving apparatuses can make the transition upon receipt of the desired information. The transition timing in Table 1 is counted starting from the time at which this information is received for the first time. Although the information might be received a plurality of times before the transition is completed, the count value is not reset. In another example, the transition time may be counted on the transmitting side inserting the information of interest.
   As mentioned above, it is possible to designate "transition_time" by inserting the absolute time information of PCR (program clock reference). In this case, the receiving apparatus 100 can effect transition based on the time designated by PCR.
(C) The transmitting side may find it necessary to display urgent information typically using superposed characters. One such occasion is when an earthquake has occurred and the incident needs to be reported using superposed characters. In this case, the character information should preferably be displayed in 3D, but doing so while 3D content display is currently underway is technically difficult; the characters would appear double and the user would have difficulty reading them.
   In the face of the challenge described in (C) above, this embodiment allows the receiving apparatus 100 to transition from 3D to 2D display and from 2D back to 3D display by suitably setting and resetting the "display_control" information in Table 1. The transition can be set as desired by the user. That is, the superposed characters can be displayed preferentially for the user's recognition or can be suppressed if so desired by the user. The user may set the receiving apparatus 100 as desired in advance so as to control display. The user settings are input through the input block 190 of the receiving apparatus 100 and forwarded to the CPU 180. This embodiment thus permits insertion of that information in the 3D information which causes the receiving apparatus 100 to effect transition automatically to 2D display during 3D content output so that superposed characters may be viewed distinctly.
   The "display_control" information does not appear in Table 2. This is because the information in Table 2 is primarily the information to be inserted into video contents. The use case discussed in (C) above showed that an original 3D content may be displayed forcibly in 2D for special purposes such as an announcement of urgent information. Thus the information for display control is not inserted in video contents; only the information in Table 1 is used for display control purposes. This enables the transmitting apparatus 200 to output detailed information that will control display on the receiving apparatus 100 in flexible fashion.
(D) The information indicative of which 3D display format is used for the 3D content of interest is also needed by the receiving apparatus 100 for giving display correctly. Illustratively, if the 3D format in use is the side-by-side format, information to that effect is inserted in the 3D information. In turn, based on the received information regarding the 3D format, the receiving apparatus 100 can properly execute decoding and other processes.
   More specifically, the receiving apparatus 100 can correctly identify the 3D display format for proper picture processing by acquiring the "three_dimension_format" and "three_dimension_sub_format" information established as part of the 3D information in Table 1 or 2. The same information is placed into two fields of Tables 1 and 2, and the receiving apparatus 100 may utilize the information in any one of these fields for processing.
(E) Some users may wish to view a 3D content in the ordinary 2D display format for reasons such as eye strains stemming from continuous viewing of 3D pictures. In such a case, if the above-mentioned side-by-side format is in effect, either the L signal (left-eye signal) or the R signal (right-eye signal) may be selected to implement 2D display. The transmitting side may designate the type of video to be viewed in 2D by specifying whether the left-eye video (L) or right-eye video (R) is to be displayed.

This embodiment exercises 2D display control in accordance with the "default_picture" information set in Tables 1 and 2. This information is also placed in two fields of Tables 1 and 2, and the receiving apparatus 100 may utilize the information in any one of these fields for processing.

With the information of Tables 1 and 2 inserted in two areas of the digital broadcast signal as described above, the receiving apparatus 100 can implement the desired functions discussed in (A) through (E) above. By having the 3D-related information inserted into the digital broadcast format, it is possible for the transmitting side to notify necessary information and for the receiving side to implement the necessary functions. Although the embodiments above have been explained with emphasis on the transport stream, the present invention is not limited to any one digital broadcast output format as long as the information of Tables 1 and 2 can be inserted in some other suitable format. Whereas MPEG-2 Video was presented above as the typical compression video format, this is only an example and the invention may be applied not only to the H.264 video format but also to all other compression formats in which the above-defined information may be inserted.

### (6) Procedures of the receiving apparatus

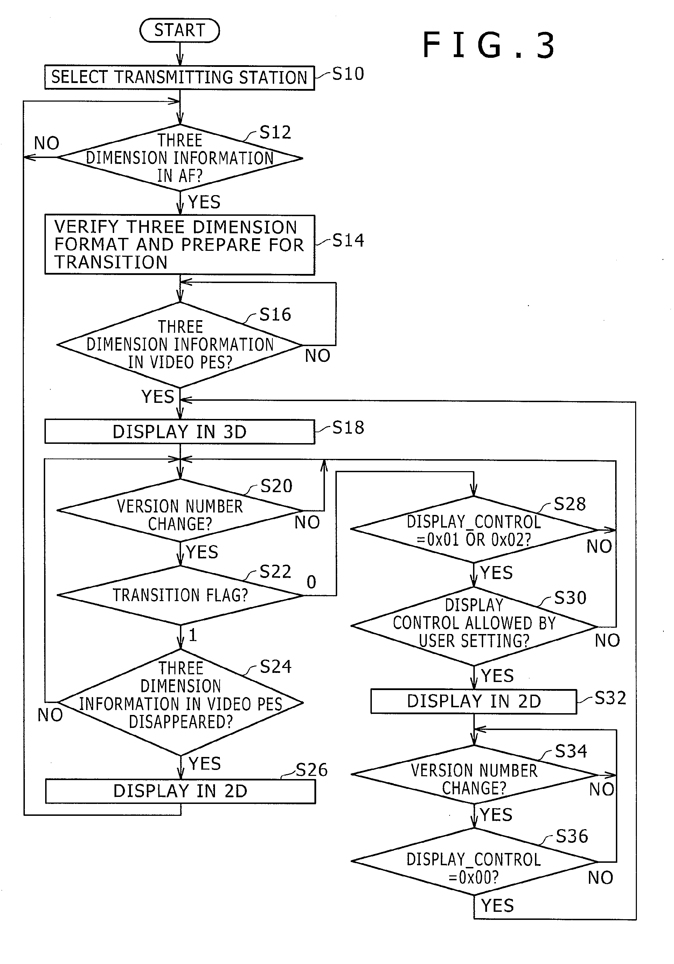

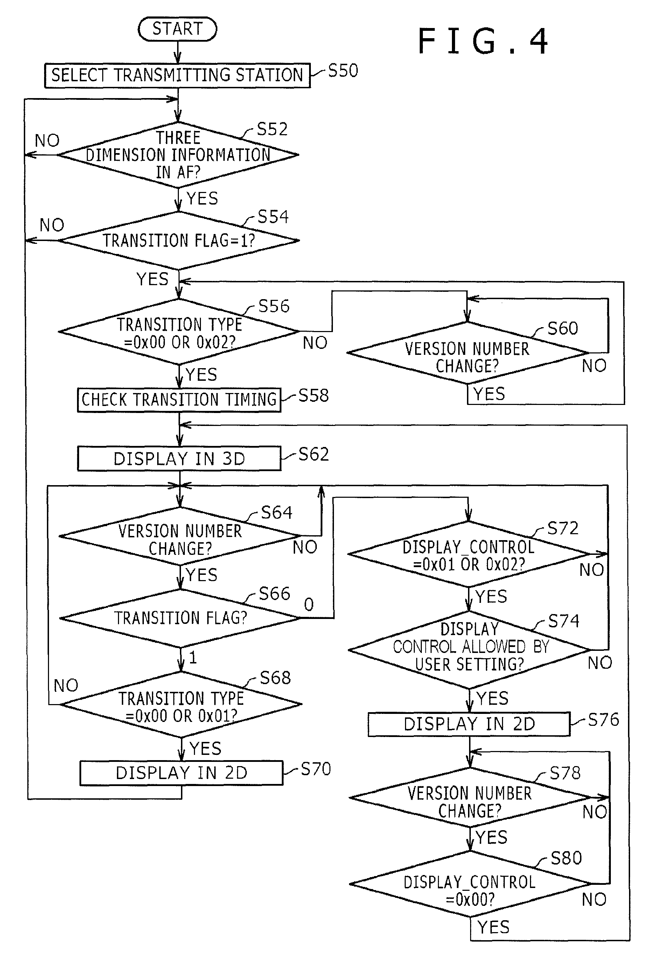

Typical procedures performed by the receiving apparatus 100 will now be described in reference to the flowcharts of Figs. 3 and 4. Fig. 3 shows a typical procedure for effecting high-speed transition between 3D and 2D display with no transition time taken into account. The procedure of Fig. 3 is carried out when the receiving apparatus 100 has the ability (i.e., high-speed transition function) to effect immediate transition upon receipt of a display transition command from the transmitting apparatus 200.

In step S10, the user selects a broadcasting station in order to receive the content of the selected program therefrom. It is assumed that a 2D display state is in effect upon selection of the broadcasting station. In step S12, a check is made to determine whether 3D information is included in AF (adaptation field 3D information). If the 3D information is found included, step S14 is reached. In step S14, the 3D format is verified and preparations are made for transition to 3D display. Verification of the 3D format is carried out based on the information of the above-described information of "three_dimension_format" and "three_dimension_sub_format." If the 3D information is not found included, then the receiving apparatus 100 waits for the information in step S12 back in its idle state.

If the receiving apparatus 100 is furnished with the high-speed transition function, steps S12 and S14 may be omitted. This is because the receiving apparatus 100 of this type is basically capable of effecting the display transition based on the 3D information included in video data.

Step S14 is followed by step S16. In step S16, a check is made to determine whether the 3D information is included in PES. If the 3D information is found included in PES, step S18 is reached. If the 3D information is not found included in PES, a wait state is entered in step S16. When step S18 is reached, that means the 3D information is included in AF (adaptation field 3D information) as well as in PES. The CPU 180 then proceeds to control such components as the video decoder 130, 3D processor 140, LED panel block 150, and audio decoder 160 to provide 3D display. This causes the LED panel block 150 to display a 3D video.

In step S20, a check is made to determine whether "version_number" has been changed based on the AF (adaptation field 3D information) received anew during the current 3D display. If the version number is found changed, step S22 is reached. If the version number is found unchanged, then a wait state is entered in step S20. In step S22, the transition flag value is verified. If the flag value is "1," step S24 is reached. If the flag value is "0," then step S28 is reached.

If the receiving apparatus 100 is furnished with the high-speed transition function, steps S20 and S22 may be omitted. This is because the receiving apparatus 100 of this type is basically capable of effecting the display transition based on the 3D information included in the video data, as mentioned above.

When step S24 is reached, that means the transition flag value is "1," so that the CPU 180 recognizes that transition from 3D to 2D is set to take place. In step S24, a check is made to determine whether the 3D information in PES has disappeared from the newly received information. If the 3D information in PES is found to have disappeared, step S26 is reached and transition is effected to 2D display.

If the 3D information is not found to have disappeared, it means that despite the earlier command to effect transition to 2D in AF (adaptation field 3D information), the 3D information found to exist in PES is interpreted as a transition time up to the transition to 2D. Thus a wait state is entered and the current 3D display is continued.

If step S22 is followed by step S28, the transition to 2D display is not effected since the transition flag value is "0." However, also in this case, urgent information such as superposed characters may need to be displayed in 2D. For this reason, a check is made in step S28 to determine whether "display_control" is "0x01" or "0x02" If the "display_control" setting is found to be "0x01" or "0x02," then step S30 is reached. In this case, it is demanded or recommended that transition be made to 2D for display of urgent information such as superposed characters. Thus in step S30 a check is made to see if transition to 2D display is permitted by the user's setting. If transition to 2D display is found permitted by the user's setting, step S32 is reached and transition is effected to 2D display. If in step S28 "display_control" is found to be neither "0x01" nor "0x02," or if in step S30 transition to 2D display is not found permitted by the user's setting, then step S20 is reached again and the current 3D display is continued.

After transition is effected to 2D display in step S32, step S34 is reached. In step S34, the 3D information in AF (adaptation field 3D information) is received during the current 2D display to determine whether the version number has been changed. If the version number is found changed, that means 3D display is designated. In that case, step S36 is reached and a check is made to determine whether "display_control" is "0x00." If in step S36 "display_control" is found to be "0x00," that means 2D display is not designated to announce urgent information such as superposed characters. In this case, step S18 is reached again and transition to 3D display is effected.

If in step S34 the version number is found unchanged or if in step S36 "display_control" is found to be "0x00," then a wait state is entered in step S34 and the current 2D display is continued.

Fig. 4 shows a typical procedure for a transition between 3D and 2D display with transition time taken into consideration. The procedure in Fig. 4 may be used effectively by a receiving apparatus 100 not furnished with the high-speed transition function.

In step S50, the user selects a broadcasting station in order to receive the content of the selected program therefrom. It is assumed that a 2D display state is in effect upon selection of the broadcasting station. In step S52, a check is made to determine whether 3D information is included in AF (adaptation field 3D information). If the 3D information is found included, step S54 is reached. In step S54, a check is made to determine whether "transition_flag" is "1."

If in step S54 "transition_flag" is found to be "1," step S56 is reached. In step S56, a check is made to see if "transition_type" is "0x00" or "0x02." If "transition_type" is found to be "0x00" or "0x02," then step S58 is reached.

If step S58 is reached, that means "transition_type" is found to be "0x00" or "0x02" so that transition occurs from 2D to 3D display. Thus a check is made on "transition_timing" in step S58. If in step S56 "transition_timing" is found to be neither "0x00" nor "0x02," then step S60 is reached since transition does not take place from 2D to 3D. In step S60, a check is made to determine whether the version number has been changed. If in step S60 the version number is found changed, step S54 is reached again. If the version number is found unchanged, then a wait state is entered in step S60.

Step S58 is followed by step S62. In step S62, transition is effected from 2D to 3D display based on the setting of "transition_timing" checked in step S58. For example, if "transition_timing" is found to be "0x02," then transition from 2D to 3D takes place 500 msec after the 3D information is received. In this case, the transmitting side outputs 3D video data 500 msec after sending the 3D information in AF (adaptation field 3D information) in consideration of the 500-msec interval. This enables the receiving apparatus 100 to display a 3D video the moment the video data is switched to 3D display.

In step S64, a check is made to determine whether "version_number" has been changed based on the information in AF (adaptation field 3D information) received anew during the current 3D display. If the version number is found changed, step S66 is reached. If the version number is found unchanged, a wait state is entered in step S64. In step S66, the transition flag value is verified. If the flag value is "1," step S68 is reached. If the flag value is "0," then step S72 is reached.

When step S68 is reached, that means the transition flag value is "1," so that the CPU 180 recognizes that transition from 3D to 2D is set to take place. In step S68, a check is made to determine whether "transition_type" is "0x00" or "0x01" based on the newly transmitted AF (adaptation field 3D information). If in step S68 "transition_type" is found to be "0x00" or "0x01," then transition takes place from 3D to 2D. Step S68 is followed by step S69 in which "transition_timing" is checked, before step S70 is reached. In step S70, transition is effected from 3D to 2D based on the transition timing checked in step S69. After step S79, control is returned to step S52 and an idle state is entered.

If in step S68 "transition_type" is found to be neither "0x00" nor "0x01," transition from 3D to 2D does not take place. In that case, step S64 is reached again.

If step S72 is reached from step S66, transition to 2D display does not occur because the transition flag value is "0." In this case, however, urgent information such as superposed characters might also be displayed in 2D. Thus in step S72, a check is made to determine whether "display_control" is "0x01" or "0x02." If "display_control" is found to be "0x01" or "0x02," step S74 is reached. In this case, it is demanded or recommended that transition be made to 2D for display of urgent information such as superposed characters. Thus in step S74 a check is made to see if transition to 2D display is permitted by the user's setting. If transition to 2D display is found permitted by the user's setting, step S76 is reached and transition to 2D display takes place. If in step S72 "display_control" is found to be neither "0x01" nor "0x02," or if in step S74 transition to 2D display is not found permitted by the user's setting, then step S64 is reached again and the current 3D display is continued.

After the transition to 2D display in step S76, step S78 is reached. In step S78, the 3D information in AF (adaptation field 3D information) is received during the current 2D display so as to determine whether the version number has been changed. If the version number is found changed, that means 3D display is designated. In that case, step S80 is reached and a check is made to determine whether "display_control" is "0x00" If in step S80 "display_control" is found to be "0x00," that means 2D display is not designated for announcement of urgent information such as superposed characters. In this case, step S62 is reached again and transition to 3D display takes place.

If in step S78 the version number is found unchanged or if in step S80 "display_control" is not "0x00," then a wait state is entered in step S78 and the current 2D display is continued.

It is to be understood that while the invention has been described in conjunction with specific embodiments with reference to the accompanying drawings, it is evident that many alternatives, modifications and variations will become apparent to those skilled in the art in light of the foregoing description. It is thus intended that the present invention embrace all such alternatives, modifications and variations as fall within the spirit and scope of the appended claims.

The present application contains subject matter related to that disclosed in Japanese Priority Patent Application JP 2009-142630 filed in the Japan Patent Office on June 15, 2009.

## Claims

1. A receiving apparatus comprising:
a video signal acquisition section (120) configured to acquire a video signal included in a digital broadcast signal; and
a control section (130, 180) configured to acquire display information regarding three-dimensional or two-dimensional display and included in both a system data area and a video data area of said digital broadcast signal in order to control the processing of video display with said video signal based on said display information.

2. The receiving apparatus according to claim 1, wherein said control section (130, 180) includes a central processing unit (180); and
said central processing unit (180) controls the components associated with said video display based on said display information included in said system data area.

3. The receiving apparatus according to claim 1, wherein said control section (130, 180) includes a decoder (130) configured to decode said video signal; and
said decoder (130) controls decode processing based on said display information included in said video data area.

4. The receiving apparatus according to claim 1, wherein said display information includes information for effecting transition to a two-dimensional video while a three-dimensional video is being broadcast.

5. The receiving apparatus according to claim 1, wherein said display information includes information for displaying a three-dimensional video as a two-dimensional video.

6. The receiving apparatus according to claim 1, wherein said display information included in said system data area includes information regarding the transition timing from a three-dimensional video to a two-dimensional video or the transition timing from a two-dimensional video to a three-dimensional video.

7. The receiving apparatus according to claim 6, wherein said information regarding the transition timing is time information indicating the time the transition takes from a three-dimensional video to a two-dimensional video, or the time the transition takes from a two-dimensional video to a three-dimensional video.

8. The receiving apparatus according to claim 6, wherein said information regarding the transition timing is acquired before the time at which said video signal transitions from a three-dimensional video to a two-dimensional video or before the time at which said video signal transitions from a two-dimensional video to a three-dimensional video.

9. The receiving apparatus according to claim 6, wherein said information regarding the transition timing is time information indicative of the time at which said video signal transitions from a three-dimensional video to a two-dimensional video, or the time at which said video signal transitions from a two-dimensional video to a three-dimensional video.

10. The receiving apparatus according to claim 1, further comprising an input section (190) configured to allow a user to input display setting information;
wherein, if said display setting information is input, then said control section (130, 180) controls the processing of video display with said video signal using said display setting information more preferentially than said display information.

11. The receiving apparatus according to claim 1, wherein said display information includes information regarding a three-dimensional video format.

12. A transmitting apparatus comprising:
a display information insertion section configured to insert display information regarding three-dimensional or two-dimensional display into both a system data area and a video data area of a digital broadcast signal; and
an output section (240) configured to output said digital broadcast signal with said display information inserted therein.

13. A communication system comprising a transmitting apparatus (200) and a receiving apparatus (100);
wherein said transmitting apparatus (200) includes:
a display information insertion section configured to insert display information regarding three-dimensional or two-dimensional display into both a system data area and a video data area of a digital broadcast signal; and
an output section (240) configured to output said digital broadcast signal with said display information inserted therein; and
said receiving apparatus (100) includes:
a video signal acquisition section (120) configured to acquire a video signal included in said digital broadcast signal; and
a control section (130, 180) configured to acquire said display information in order to control the processing of video display with said video signal based on said display information.

14. A display control method comprising the steps of:
acquiring a video signal included in a digital broadcast signal;
acquiring display information regarding three-dimensional or two-dimensional display and included in both a system data area and a video data area of said digital broadcast signal; and
controlling the processing of video display with said video signal based on said display information.

15. A data structure for a digital broadcast signal comprising a video signal related to content to be broadcast and system data;
wherein said video signal and said system data include display information regarding three-dimensional or two-dimensional display; and
said digital broadcast signal causes a receiving apparatus (100) to function in a manner controlling the processing of video display with said video signal based on said display information.
